Europäisches Patentamt

European Patent Office

Office européen des brevets

(19)

(11) Numéro de publication : **0 330 792 B1**

(12)

# FASCICULE DE BREVET EUROPEEN

(45) Date de publication du fascicule du brevet :
24.07.91 Bulletin 91/30

(51) Int. Cl.$^5$ : **C03B 9/30, B65D 23/02**

(21) Numéro de dépôt : 88440015.1

(22) Date de dépôt : 08.03.88

(54) **Récipient en cristal traité pour empêcher la migration du plomb vers son contenu.**

(30) Priorité : 29.02.88 FR 8802668

(43) Date de publication de la demande :
06.09.89 Bulletin 89/36

(45) Mention de la délivrance du brevet :
24.07.91 Bulletin 91/30

(84) Etats contractants désignés :
**AT BE DE ES GB IT SE**

(56) Documents cités :
**DE-A- 3 316 149**
**US-A- 2 802 309**
**US-A- 4 390 593**

(56) Documents cités :
**FOOD SCIENCE AND TECHNOLOGY ABS-
TRACTS DATABASE, AN 87-01c0030, 1987,
International Food Information Service, Reading, UK; & Bulletin of the National Institute of
Hygienic Sciences, 1984, vol. 103, pages
154-157**

(73) Titulaire : **COMPAGNIE DES CRISTALLERIES
DE BACCARAT**
**BP.31**
**F-54120 Baccarat (FR)**

(72) Inventeur : **Dumas, Jean**
**10 Route des Ecoles**
**Marzelay F-88100 Saint Dié (FR)**

(74) Mandataire : **Bossard, Jacques-René**
**Cabinet MEYER & COURTASSOL Bureau
EUROPE 20 Place des Halles**
**F-67000 Strasbourg (FR)**

## Description

La présente invention concerne d'une manière générale les récipients en cristal destinés à contenir des produits alimentaires ou des boissons, et plus spécialement, bien que non limitativement, les flacons destinés à contenir des alcools tels que le cognac.

On sait que tout liquide contenu dans un récipient tend à dissoudre, quel que soit le matériau de ce récipient, une certaine proportion des éléments de ce matériau. Cette proportion est évidemment généralement extrêmement faible, par exemple de l'eau contenue dans du verre ordinaire dissout une certaine proportion du $Na_2O$ contenu dans ce verre. Un test normalisé permet d'évaluer cette proportion à 30 à 1000 µg $Na_2O$ par g de verre, selon la qualité de ce dernier.

Ce phénomène général, s'il est à prendre en compte en chimie analytique et dans certaines branches de la chimie fine, est d'une manière générale sans incidence sur la vie pratique, sauf dans des cas très particuliers, tel que celui de certains métaux lourds tels que le cuivre ou le plomb qui tendent à "migrer" dans les produits alimentaires quand ils servent par exemple à constituer des ustensiles de cuisine ou quand ils sont traversés par des boissons. Plus particulièrement encore, le cristal contient notamment du plomb, et l'on a constaté que dans des liquides acides, tels que du cognac dont le pH est de l'ordre de 3,5, contenus dans des flacons en cristal, on trouve au bout d'un certain temps des quantités de plomb non négligeables pouvant atteindre plusieurs ppm, et qui risquent de nuire à la santé, le plomb étant considéré comme toxique à partir de concentrations sanguines de 70 µg/100 cc.

Ce phénomène a d'ailleurs fait l'objet d'études approfondies, qui ont conduit à l'élaboration de moyens de contrôle efficaces en vue "d'assurer que la population soit protégée contre les dangers éventuels dus à un contact des aliments avec la surface des articles en verre employés pour la préparation, le service et la conservation des aliments et des boissons" (Norme Internationale ISO 7086/1-1982).

Devant ce problème grave et complexe, l'invention vise plus simplement à éliminer cet inconvénient grâce à un produit industriel nouveau constitué par un récipient, tel qu'un flacon, réalisé essentiellement en cristal, mais comportant un "écran" de verre neutre placé entre son contenu et la paroi de cristal. Bien entendu un tel écran doit être très mince, de l'ordre de quelques microns seulement, mais suffisant pour éviter toute migration.

L'invention vise également un procédé pour réaliser un tel récipient et plus particulièrement un flacon, en assurant lors de cette réalisation la présence, sur la paroi interne de ce récipient, d'une couche continue excessivement mince de verre neutre intimement liée à la paroi de cristal.

Un tel procédé se caractérise essentiellement par le fait que préalablement au cueillage du cristal au moyen d'une canne à souffler usuelle, on cueille une petite quantité de verre sans plomb compatible avec le cristal, que l'on "égoutte", pour la faire devenir très faible, puis que l'on soumet à un maillochage pour lui donner la forme d'une goutte sans concavité. Après réchauffage au besoin, on procède alors au cueillage de la paraison de cristal qui vient recouvrir la goutte de verre sans plomb précédente, en y adhérant sans occlure d'air, et on procède alors au soufflage classique de la pièce. A ce moment le peu de verre sans plomb présent sous le cristal en bout de canne se trouve fortement distendu et habille d'une couche très mince tout l'intérieur de la pièce, protégeant ainsi son contenu contre le contact direct du cristal et par conséquent contre sa pollution par le plomb.

Il est bien entendu que le verre utilisé pour créer cette couche écran doit être un verre sans plomb possédant les mêmes caractéristiques physiques que le cristal, et notamment le même coefficient de dilatation pour éviter toute brisure de ladite couche au refroidissement ou à la recuisson, et le même indice de refraction pour que la pièce conserve sa brillance. La pièce peut d'ailleurs être taillée de manière usuelle, c'est-à-dire que l'on ne voit pas la couche écran et que la pièce conserve son aspect extérieur.

Des objets creux en verre ont déjà été réalisés par soufflage de deux couches de verre superposées par exemple de couleur différente, de manière à créer par exemple un effet décoratif. Un tel processus est décrit par exemple au DE-A-3 316 149. Toutefois il est limité à l'obtention de tels effets décoratifs et n'ont jamais été appliqués : la formation, sur la surface interne d'un volume creux en cristal, d'une couche extrêmement mince de verre sans plomb s'opposant à la migration du plomb du cristal vers le liquide contenu dans le volume creux.

Bien entendu l'exemple précédent ne présente aucun caractère de limitation à l'application de l'invention, qui peut comporter de nombreuses variantes. Ainsi, notamment, l'invention vise non seulement les flacons destinés à contenir des boissons alcoolisées pendant des durées prolongées, mais aussi bien des récipients soufflés tels que des vinaigriers ou analogues, destinés à d'autres produits alimentaires acides que l'on souhaite protéger contre la pollution du plomb.

L'application de l'invention permet donc de proposer au consommateur des flacons ou carafes de boissons à caractère acide qui, tout en conservant toutes les qualités artistiques du cristal, peuvent être garantis contre toute migration du plomb de ce cristal vers le liquide contenu.

feinen Schicht bedeckt.

## Revendications

1. Récipient en cristal destiné à contenir des produits alimentaires et des boissons à caractère acide, notamment les boissons alcoolisées, ledit récipient comportant sur sa surface interne une pellicule mince continue de verre sans plomb possédant les mêmes caractéristiques physiques que le cristal, et notamment le même coefficient de dilatation et le même indice de réfraction et formant "écran", en vue d'empêcher la migration du plomb du cristal vers lesdits produits et boissons.

2. Récipient selon la revendication 1, caractérisé en ce qu'il consiste en un flacon destiné à contenir du cognac ou boisson analogue.

3. Procédé pour la réalisation d'un récipient selon l'une quelconque des revendications 1 et 2, ledit procédé consistant, préalablement au façonnage par soufflage d'une paraison de cristal, à cueillir une quantité très faible de verre sans plomb possédant les mêmes caractéristiques physiques que le cristal, et notamment le même coefficient de dilatation et le même indice de réfraction, puis à cueillir par dessus la paraison de cristal qui vient adhérer au verre sans plomb, de manière que lors du façonnage par soufflage, le verre se trouve fortement distendu et habille d'une couche très mince tout l'intérieur de la pièce.

## Patentansprüche

1. Kristallglasbehälter, der dazu vorgesehen ist, säurehaltige Lebensmittel und Getränke, insbesondere mit Alkohohl versetzte Getränke, aufzunehmen, und der an seiner inneren Oberfläche einen ununterbrochenen, dünnen Überzug aus bleifreiem Glas aufweist, das die gleichen physikalischen Eigenschaften wie das Kristallglas und insbesondere den gleichen Ausdehnungskoeffizienten und den gleichen Brechungsindex besitzt und hinsichtlich der Migration des Bleies des Kristallglases in die Lebensmittel und Getränke einen "Schutzschild" bildet.

2. Behälter gemäß Anspruch 1, dadurch gekennzeichnet, daß er aus einer Flasche besteht, die dazu vorgesehen ist, Cognac oder ein entsprechendes Getränk aufzunehmen.

3. Verfahren zur Herstellung eines Behälters gemäß einem der Ansprüche 1 und 2, wobei das Verfahren darin besteht, vor der Blasformgebung einer Kristallglasmasse eine sehr geringe Menge bleifreien Glases aufzunehmen, das die gleichen physikalischen Eigenschaften wie das Kristallglas und insbesondere den gleichen Ausdehnungskoeffizienten und den gleichen Brechungsindex besitzt, dann darauf die Kristallglasmasse aufzunehmen, die auf dem bleifreien Glas haftet, derart, daß während der Blasformgebung das bleifreie Glas stark gespannt wird und das gesamte Innere des Werkstückes mit einer sehr

## Claims

1. Crystal container intended to contain foodstuffs and beverages of an acid nature, in particular alcoholic beverages, the inner surface of the container comprising a thin continuous film of lead-free glass having the same physical properties as the crystal and in particular the same coefficient of expansion and the same index of refraction and forming a "shield" in order to prevent the lead from migrating from the crystal to these foodstuffs and beverages.

2. Container as claimed in claim 1, characterized in that it consists in a decanter intended to contain cognac or a like beverage.

3. Method for the production of a container as claimed in any one of claims 1 and 2, the method consisting, prior to forming by blowing of a crystal parison, in gathering a very small quantity of lead-free glass having the same physical properties as the crystal and in particular the same coefficient of expansion and the same index of refraction, then in gathering the crystal parison over the lead-free glass which adheres thereto so that during forming by blowing the glass is highly distended and coats the whole of the interior of the article with a very thin layer.